# EUROPEAN PATENT APPLICATION

(11) **EP 4 737 490 A1**
(43) Date of publication of application: **06.05.2026**
(21) Application number: 23942837.8
(22) Date of filing: 29.06.2023
(51) Int. Cl.: C08F 210/16, C08F 210/14, C08F 4/02, C08F 10/00

(54) **METHOD FOR PREPARING POLYOLEFIN BY MEANS OF CASCADE POLYMERIZATION**

(71) Applicant: INSTITUTE OF ZHEJIANG UNIVERSITY-QUZHOU, Quzhou, Zhejiang 324000 (CN)
(72) Inventor: WANG, Wenjun, Quzhou, Zhejiang 324000 (CN); ZHU, Bangban, Quzhou, Zhejiang 324000 (CN); LIU, Pingwei, Quzhou, Zhejiang 324000 (CN); LI, Bogeng, Quzhou, Zhejiang 324000 (CN); YAO, Zhen, Quzhou, Zhejiang 324000 (CN); HU, Jijiang, Quzhou, Zhejiang 324000 (CN); YANG, Xuan, Quzhou, Zhejiang 324000 (CN); SHI, Shengbin, Quzhou, Zhejiang 324000 (CN); WANG, Qingyue, Quzhou, Zhejiang 324000 (CN); LIM, Khak Ho, Quzhou, Zhejiang 324000 (CN)
(74) Representative: Ghirardi, Valeria
(86) International application number: PCT/CN2023/103683
(87) International publication number: WO 2025/000320

(57) **Abstract**

The present invention provides a method for preparing polyolefins by cascade polymerization, comprising the following steps:
(1) under anhydrous and anaerobic conditions, ethylene and/or propylene monomers are subjected to oligomerization reaction in a non-polar organic solvent in the presence of a COF supported oligomerization catalyst or a COF supported homopolymerization catalyst, and optional cocatalyst, to obtain an oligomeric product or macromonomer with terminal double bonds, respectively; and
(2) then, under anhydrous and anaerobic conditions, in the presence of an olefin polymerization catalyst, the oligomeric product or macromonomer with terminal double bonds is further polymerized with an olefin monomer in a non-polar organic solvent to obtain the polyolefins.

## Description

### Technical field

The present invention relates to a method for preparing polyolefins by cascade polymerization (tandem polymerization), which comprises using a COF supported oligomerization or a homopolymerization catalyst.

### Background art

Polyolefin is one of the most important synthetic materials, accounting for 60% of the total production of synthetic resins, therefore, the development of the polyolefin industry directly affects the national economy. The quality of polyolefin products is mainly controlled by the polymerization technology and process of olefin polymerization. Among them, cascade polymerization is a polymerization reaction that uses two or more catalyst systems that can catalyze different reactions simultaneously. Cascade polymerization has advantages such as avoiding intermediate product separation, storage, transportation, convenience and efficiency etc. However, in the cascade polymerization process, the simultaneous use of two catalysts may lead to mutual influence, manifested intuitively in changes in polymerization activity and copolymer molecular weight.

Covalent organic frameworks (COFs) materials are a type of porous two-dimensional or three-dimensional polymer materials with periodic structures connected by covalent bonds, the pore size and skeleton structure thereof can be precisely controlled by monomers and linkage bonds. The uniform and adjustable pore structure of COF provide a uniform and stable chemical environment for the supported catalyst, making it easy to achieve precise control of catalytic performance.

Therefore, if COF supported oligomerization or homopolymerization catalysts can be utilized to reduce the mutual influence between oligomerization or homopolymerization catalysts and copolymerization catalysts in cascade polymerization, it will be beneficial for the development of a method for effectively preparing high-performance thermoplastic polyolefin products by cascade polymerization.

### Detailed description of the invention

In the first aspect, the present invention provides a method for preparing polyolefins by cascade polymerization, which comprises the following steps:
(1) under anhydrous and anaerobic conditions, ethylene and/or propylene monomers are subjected to oligomerization reaction in a non-polar organic solvent in the presence of a COF supported oligomerization catalyst or a COF supported homopolymerization catalyst, and an optional cocatalyst, to obtain an oligomeric product or macromonomer with terminal double bonds, respectively; and
(2) then, under anhydrous and anaerobic conditions, in the presence of an olefin polymerization catalyst, the oligomeric product or macromonomer with terminal double bonds are further polymerized with an olefin monomer in a non-polar organic solvent to obtain the polyolefins.

In the above method, the anhydrous and anaerobic conditions refer to the absence of water in the polymerization reaction, and obtaining anaerobic conditions by replacing oxygen in the reactor with inert gases such as nitrogen, argon, helium, and supercritical carbon dioxide and then vacuuming.

The COF supported oligomerization catalyst comprises those metallocene catalysts and post metallocene catalysts known as oligomerization catalysts in the art, especially those in which the metal is selected from chromium, nickel, thallium, hafnium, titanium, vanadium, zirconium, and molybdenum, preferably selected from chromium and nickel. Examples of the metallocene catalyst comprise, for example, 1,2,3,4,5-Ph₅-Cp/Cr (EH)₃, {2-[1-(3H-Ind) CyH] Th} TiCl₃, and decamethyl-dicyclopentadiene zirconium dichloride. Examples of the post metallocene catalyst comprise, for example, Ar₂PN (Me) Par₂/Cr, {HN (CH₂CH₂PPh₂) ₂} CrCl₃, Cr (EH) ₃/2,5-DMP, [(2-Pe-S-Et) ₂-A] CrCl₃, DPPB/[Cr (H₂O) ₄Cl₂] Cl · 2H2O, SNS Cr, NiCl₂ {[2- (5-Ph-Pyz) Et] ₂E}, NiCl₂ {[2- (3,5-Me₂Pyz) Me] ₂BuA}, Mo (µ- N-Bu^{t}AlCl₂) ₂, NiBr₂ {[2- (3,5-Me₂Pyz)] EtA}, V (NAd) Cl₂ [8-(2,6-Me₂An)-5,6,7-H₃Qu], NiBr₂[(3,5-Me₂Pyz)₂PhP], WCl₆/2DippNH₂/4NEt₃, TaCl₃ (NDipp) (tmeda), Nb (N-2,6-Pr^{j}₂Ph) Me₂ [2-(2,6-Me₂Ph) NCH₂ (Pyd)], Ti (OBuⁿ) ₄, NiCl₂ (Buⁿ₃P) ₂, Cr (acac) ₃/Ph₂P) ₂NPrⁱ, Cr (acac) ₃/[(*o*-F-CH) (o-MeOCH) P] ₂N (Prⁱ), Cr (CO) ₄ [(Ph₂P) ₂NPr^{j}], [(DPPDME) CrCl₃] ₂, CrCl₂ (THF) ₂/Ph₂PN (Me) (CH₂) ₃N (Me) PPh₂, Cr (SBDP) Cl₃, [2-CrCl₂]⁺[B (C₆F₅) ₄] -, Cr (acac) ₃/Ph₂PN (But) PPh₂, PNP/CrCl₃ (THF) ₃, and Cr (CO) ₆/Ph₂PN (Pr^{j}) Si (CH₃) ₂CH₂Ph₂.

The SNS-Cr catalyst is compound 1 having the following structural formula:

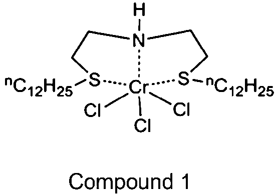

Preferably, the COF supported oligomerization catalyst is selected from Ti (OBuⁿ)₄, NiCl₂ (Buⁿ₃P)₂, Cr (EH)₃/2,5-DMP, Cr (acac)₃/[(*o*-F-CH) (o-MeOCH) P] ₂N (Prⁱ), SNS-Cr, PNP/CrCl₃ (THF) ₃, [(2-Pe-S-Et) ₂-A] CrCl₃, DPPB/[Cr (H₂O) ₄Cl₂] CI · 2H₂O, NiCl₂ {[2- (5-Ph-Pyz) Et] ₂E}, NiCl₂ {[2- (3,5-Me₂Pyz) Me] ₂BuA}, NiBr₂ {[2- (3,5-Me₂Pyz)] EtA}, NiBr₂ [(3,5-Me₂Pyz) ₂PhP], and decamethyl-dicyclopentadiene zirconium dichloride.

The COF supported oligomerization catalyst can be prepared by the methods known in the art, for example, by the method disclosed in WO2022/133849, or by the method disclosed in Chinese application No.202310731888.5 (a method for preparing a COF supported olefin polymerization catalyst), the entire contents of the two applications are incorporated herein by reference.

Preferably, the COF supported oligomerization catalyst is prepared by the method disclosed in Chinese application No. 202310731888.5, wherein the method comprises the following steps:
(1) activating a COF material to obtain an activated COF material;
(2) firstly, under inert atmosphere protection, the activated COF material is reacted with a ligand constituting an olefin polymerization catalyst in a non-polar organic solvent at a temperature of 10-100°C, preferably about 20-100°C, and more preferably about 40-80°C, to bind the ligand to the activated COF material;
   subsequently, at a temperature of 20-100°C, preferably 30-90°C, and more preferably 40-80°C, a metal compound constituting the olefin polymerization catalyst is coordinated to the ligand in a non-polar organic solvent to form a polyolefin catalyst bound to the COF material, and then solid-liquid separation is performed and the solid phase is collected;
(3) optionally, washing and drying the solid phase to obtain a COF supported olefin polymerization catalyst.

For the details of the method for preparing COF supported olefin polymerization catalyst disclosed in Chinese application No. 202310731888.5, please refer to the content disclosed in the application, and the entire content of the application is hereby incorporated by reference.

Among them, regarding the COF materials, they are known in the art and is disclosed in the above-mentioned application WO2022/133849 and Chinese application No. 202310731888.5, all of which are incorporated herein by reference.

**The** COF materials specifically used in the examples and comparative examples of the present invention comprise COF1, COF300, COF303, and COF5, and the structures of these COFs are as follows:

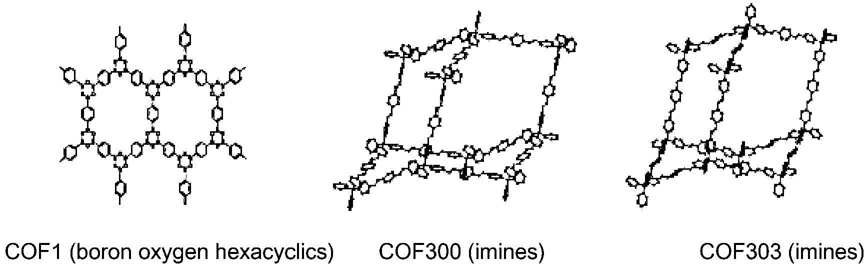

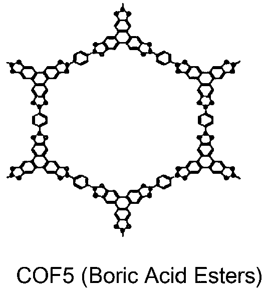

The COF supported homopolymerization catalyst comprises known metallocene catalysts and post metallocene catalysts that can be used as homopolymerization catalysts in the art, especially those in which the metal is selected from zirconium, titanium, palladium, and hafnium, preferably selected from zirconium and titanium. Examples of the metallocene catalyst comprise, for example, rac-dimethylsilyl-bridged bis(2-methyl-4-phenylindenyl) zirconium dichloride, zirconocene dichloride, [CpMe₄(SiMe₂N-Bu^{t})]TiMe₂ , dicyclopentadienyl dimethyl hafnium, diindenyl dimethyl zirconium, rac-vinylidene-bridged diindenyl zirconium dichloride, rac-dimethylsilyl-bridged di(2-methylindenyl) zirconium dichloride, dimethylsilyl-bridged diindenyl zirconium dichloride, diphenyl carbon-bridged cyclopentadienyl-fluorenyl zirconium dichloride, dimethylsilyl-bridged tetramethylcyclopentadienyl tert-butylamino dimethyl titanium, diindenyl zirconium dichloride, dicyclopentadienyl zirconium bis(phenoxide), dimethylsilyl-bridged diindenyl zirconium dichloride, diphenyl carbon-bridged cyclopentadienyl fluorenyl zirconium chloride, diphenyl carbon-bridged cyclopentadienyl - (2-dimethylamino-fluorenyl ) zirconium dichloride, dimethylsilyl-bridged tetramethyl cyclopentadienyl tert-butylamino dimethyl titanium, dimethylsilyl-bridged 3-pyrrolyindenyl tert-butylamino dimethyl titanium, rac dimethylsilyl-bridged di(2-methylindenyl) zirconium chloride, and dimethylsilyl-bridged fluorenyl tert-butylamino dimethyl titanium. Examples of the post metallocene catalyst comprise, for example, zirconium phenoxide imine, titanium phenoxide imine, {2-SiMe₃-6-{[(3,5-F₂Ph)Im]Me}PhO}₂TiCl₂ , [(N-Bu^{t}Sa)CyP-A]₂ZrCl₂ , { κ ²-1-P(2-OMe-Ph)₂-2-P(*O*)(OEt)₂-Ph}PdMe(2,6-Me₂Pyd)⁺(SbF₆)- , (β-Ki)₂ZrCl_{2∘}

In the present invention, the preferred COF supported homopolymerization catalyst is selected from rac-dimethylsilyl-bridged bis (2-methyl-4-phenylindenyl) zirconium dichloride, [CpMe₄(SiMe₂N-Bu^{t})]TiMe₂ , zirconocene dichloride, dimethylsilyl-bridged diindenyl zirconium dichloride, dicyclopentadienyl zirconium bis(phenoxide), dimethylsilyl-bridged diindenyl zirconium dichloride, titanium phenoxide imine, and zirconium phenoxide imine.

The COF supported homopolymerization catalyst can be prepared according to methods known in the art, such as those disclosed in WO2022/133849, or those disclosed in Chinese application No. 202310731888.5, the entire contents of which are incorporated herein by reference.

Preferably, the COF supported homopolymerization catalyst is prepared using the method disclosed in the afore-mentioned Chinese application No. 202310731888.5.

In the present invention, the COF supported oligomerization catalyst and the COF supported homopolymerization catalyst can be pre prepared by methods known in the art (such as those disclosed in WO2022/133849 or Chinese application No. 202310731888.5).

Alternatively, the COF supported oligomerization catalyst and the COF supported homopolymerization catalyst can be prepared in situ, for example, activated COF and catalyst are fed to a polymerization reactor and mixed for 1-20 minutes in a non-polar organic solvent used for polymerization reaction at a polymerization reaction temperature of 20-180°C, preferably 50-120°C, to prepare COF supported oligomerization catalyst or COF supported homopolymerization catalyst.

The amount of the COF supported oligomerization catalyst or COF supported homopolymerization catalyst is usually 0.5-100 mg/L, preferably 1-50 mg/L, and more preferably 3-20 mg/L, calculated relative to the volume (L) of the solvent used.

The cocatalyst is known in the art and typically comprises alkyl aluminum compounds such as triethylaluminum and triisobutylaluminum; alkyl aluminoxanes, such as methylaluminoxane, modified methylaluminoxane; tri (pentafluorophenyl) borane etc.; and mixture thereof. The amount of the cocatalyst is usually 1-100mmol/L, preferably 2-50mmol/L, and more preferably 5-40mmol/L, calculated relative to the volume (L) of the solvent used.

The non-polar organic solvent is known in the art, comprising, for example, aliphatic compounds containing 5-12 carbon atoms, cycloaliphatic compounds containing 6-12 carbon atoms, aromatic compounds containing 6-12 carbon atoms and their halides, ether compounds containing 4-12 carbon atoms, and mixtures thereof. Examples of the solvent comprise, for example, n-hexane, n-heptane, n-octane, n-dodecane, cyclohexane, toluene, xylene, mesitylene, chlorobenzene, 1,2,4-trichlorobenzene, ether, and mixtures thereof. Preferably, the solvent is selected from toluene, n-hexane, chlorobenzene, cyclohexane, n-hexane, isooctane, and mixtures thereof. More preferably, the solvent is selected from toluene, n-hexane, chlorobenzene, isooctane, and mixtures thereof.

The step (1) is carried out under anhydrous and anaerobic conditions, with a typical reaction temperature of 20-180°C, preferably 50-120°C; the pressure is 0.2-4.0MPa; the reaction time is 5-100mins, preferably 10-30mins.

The oligomeric products comprise, for example, alpha-olefins such as 1-butene, 1-hexene, and 1-octene, as well as 4-methyl-1-pentene etc.

The macromonomer with terminal double bond is polyethylene/polypropylene macromonomer, which usually has a molecular weight of 1000-10000g/mol, preferably 2000-5000g/mol, wherein the molecular weight is the number average molecular weight measured by high-temperature gel permeation chromatography.

Optionally, when the selectivity of the oligomeric product in step (1) is low, the method further comprises separation and purification steps to increase the purity of the oligomeric product to, for example, greater than 90%. For example, when the oligomeric product is 4-methyl-1-pentene, its selectivity is usually less than 60%, and in this case, it is necessary to separate and purify the oligomeric product to increase its purity to 90% above., wherein the methods of separation and purification are known in the art, such as extraction.

The olefin monomer is selected from C2-C10 olefins, such as ethylene, propylene, 1-butene, 1-hexene, 1-octene, 1-decene etc. Preferably, the olefin monomer is selected from ethylene, propylene, 1-hexene, and 1-octene.

Especially, the olefin monomer comprises the following situations:
(1) when the oligomeric product in step (1) is alpha-olefins such as 1-butene, 1-hexene, 1-octene etc., the olefin monomer is ethylene;
(2) when the oligomeric product in step (1) is 4-methyl-1-pentene, the olefin monomer does not need or be alpha-olefins such 1-butene, 1-hexene, 1-octene etc.

Therefore, correspondingly, the polymerization reaction comprises the following situations:
(1) when the oligomeric product in step (1) is alpha-olefins such as 1-butene, 1-hexene, 1-octene etc., the polymerization reaction is copolymerization of alpha-olefin and ethylene to produce ethylene/alpha polyolefin;
(2) when the oligomeric product in step (1) is 4-methyl-1-pentene, the polymerization reaction is a homopolymerization reaction of the separated and purified 4-methyl-1-pentene to produce poly (4-methyl-1-pentene) (PMP), or a copolymerization reaction of 4-methyl-1-pentene and alpha-olefins such as 1-butene, 1-hexene, 1-octene to produce 4-methyl-1-pentene/alpha polyolefin.

The olefin polymerization catalyst is known in the art, comprising those disclosed in WO2022/133849, the entire content of which is incorporated herein by reference. Specifically, the olefin polymerization catalyst comprises metallocene catalysts and post metallocene catalysts known in the art.

The metallocene catalyst comprises, for example, zirconocene dichloride, bis-cyclopentadienyl dimethyl hafnium, diindenyl dimethyl zirconium, rac-vinylidene-bridged diindenyl zirconium dichloride, rac-dimethylsilyl-bridged di(2-methylindenyl) zirconium dichloride, dimethylsilyl-bridged diindenyl zirconium dichloride, diphenylcarbon-bridged cyclopentadienyl fluorenyl zirconium dichloride, dimethylsilyl-bridged tetramethyl cyclopentadienyl tert-butylamino dimethyl titanium, diindenyl zirconium dichloride, methylsilyl (N-tert-butylamino) (tetramethylcyclopentadienyl) titanium dichloride, bis [2-(3',5'-di-tert-butylphenyl)-indenyl] zirconium dichloride, bis (2-methyl-4,5-phenylindenyl) zirconium dichloride, dicyclopentadienyl zirconium bis(phenoxide), dimethylsilyl-bridged diindenyl zirconium dichloride, diphenylcarbon-bridged cyclopentadienyl -fluorenyl zirconium dichloride, diphenylcarbon-bridged cyclopentadienyl - (2-dimethylamino-fluorenyl) zirconium dichloride, dimethylsilyl-bridged tetramethylcyclopentadienyl tert-butylamino dimethyl titanium, dimethylsilyl-bridged 3-pyrrolidinyl indenyl-tert-butylamino dimethyl titanium, rac-dimethylsilyl-bridged di(2-methylindenyl) zirconium dichloride, dimethylsilyl-bridged fluorenyl tert-butylamino dimethyl titanium, and CGC-Ti catalyst.

The post metallocene catalysts comprise, for example, imine-amine type catalysts, ketimine type catalysts, amidine type catalysts, di-imine palladium nickel catalysts, phenoxide imine type catalysts, and pyridine amine hafnium catalysts.

Preferably, the olefin polymerization catalyst is selected from the group consisting of zirconocene dichloride, bis-cyclopentadienyl dimethyl hafnium, diindenyl dimethyl zirconium, rac-vinylidene-bridged diindenyl zirconium chloride, rac-dimethylsilyl-bridged di (2-methylindenyl) zirconium dichloride, diphenylcarbon-bridged cyclopentadienyl fluorenyl zirconium dichloride, dimethylsilyl-bridged tetramethyl cyclopentadienyl tert-butylamino dimethyl titanium, diindenyl zirconium dichloride, methylsilyl (N-tert-butylamine) (tetramethylcyclopentadienyl) titanium dichloride, bis(2-methyl-4,5-phenylindenyl) zirconium dichloride, bis-cyclopentadienyl-bis-phenoxide zirconium, dimethylsilyl-bridged diindenyl zirconium dichloride, diphenylcarbon-bridged cyclopentadienyl fluorenyl zirconium dichloride, CGC-Ti catalyst, and pyridine amine hafnium catalyst.

More preferably, the olefin polymerization catalyst is selected from the group consisting of zirconocene dichloride, rac-ethylene bridged diindenyl zirconium dichloride, rac-dimethylsilyl-bridged di(2-methylindenyl) zirconium dichloride, dimethylsilyl-bridged tetramethylcyclopentadienyl tert-butylamino dimethyl titanium, methylsilyl (N-tert-butylamine) (tetramethylcyclopentadienyl) titanium dichloride, dimethylsilyl-bridged diindenyl zirconium dichloride, CGC-Ti catalyst, and pyridine amine hafnium catalyst. Most preferably, the olefin polymerization catalyst is selected from zirconocene dichloride, rac-vinylidene-bridged diindenyl zirconium dichloride, dimethylsilyl-bridged diindenyl zirconium dichloride, CGC-Ti catalyst, and pyridine amine hafnium catalyst.

The CGC-Ti catalyst is compound 2 having the following structural formula:

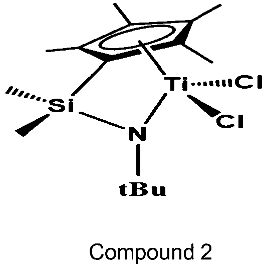

The pyridine amine hafnium catalyst is compound 3 having the following structural formula:

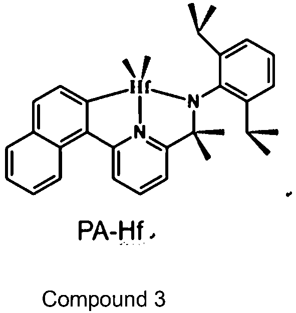

The amount of the olefin polymerization catalyst is usually 1-100mg/L, preferably 2-50mg/L, and more preferably 3-20mg/L, calculated relative to the volume (L) of the solvent used.

The ratio of the oligomeric product to the olefin monomer is (0.2-2): 1, preferably (0.3-1): 1.

The ratio of the macromonomer with terminal double bonds to the olefin monomer is (0.001-0.1): 1, preferably (0.01-0.04): 1.

Step (2) is continuously carried out in the afore-mentioned non-polar organic solvent under anhydrous and anaerobic conditions, with a typical reaction temperature of 20-180 °C, preferably 80-160 °C; a typical pressure of 0.5-4.0 MPa, preferably 1.0-3.0 MPa; and a typical reaction time of 10-200mins, preferably 30-60mins.

The above preparation method is characterized in that a COF supported oligomerization catalyst or homopolymerization catalyst is used for the first step of oligomerization or homopolymerization, which reduces the mutual influence between the two catalysts in the cascade polymerization system, thereby improving the efficiency of the cascade polymerization reaction and the quality of polyolefin products, which is manifested in higher molecular weight and alpha-olefin content, as well as higher processing and mechanical properties than the cascade polymerization products obtained using an unsupported catalyst.

When homopolymerization is carried out in step (1), the above preparation method can prepare polyolefin products with long branched chains.

Therefore, in the second aspect, the present invention relates to a polyolefin prepared by the above method, which exhibits higher molecular weight and alpha-olefins content.

### Examples

The following examples will provide a clear and complete description of the embodiments of the present invention. Obviously, the examples are only illustrative and not restrictive. Based on the examples of the present invention, all other examples obtained by ordinary skilled persons in the art without creative labor are within the scope of protection of the present invention.

### Example 1

### (1) Pre-preparation of COF supported Ti (OBuⁿ) ₄ catalyst

The COF supported Ti (OBuⁿ) ₄ catalyst was prepared using the method for preparing a COF supported catalyst disclosed in WO2022/133849, the specific steps are as follows: activating COF1 at 300°C and under vacuum for 6 hours; under a nitrogen atmosphere, 100mg of activated COF1 and 100mg of trimethylaluminum were dispersed in 100ml of n-hexane, stirred at 25°C for 48 hours for reaction, filtered, washed with toluene, and dried at 50°C to obtain pretreated COF1; in a glove box filled with nitrogen, 100mg of pretreated COF1, 50mg of Ti (OBuⁿ) ₄ catalyst and 100ml of chlorobenzene were mixed, stirred at 0°C for 72 hours for reaction, filtered, washed with toluene, and vacuum dried at 50°C to obtain a COF1 supported Ti (OBuⁿ) ₄ catalyst.

### (2) Use of the catalyst in the preparation of an ethylene butadiene copolymers by cascade polymerization

Vacuum treating a 1-liter high-pressure kettle at 140°C for 3 hours, adding 600ml of n-hexane to the kettle, adjusting the ethylene pressure inside the kettle to 25 bar, adjusting the temperature inside the kettle to 50°C, and then adding 12mg of the prepared COF1 supported Ti (OBuⁿ) ₄ catalyst and 10mmol of triethylaluminum and allowing reaction for 0.2 hours to obtain a oligomeric product 1-butene, with a 1-butene selectivity of 91.0%; and

Adjusting the temperature inside the kettle to 140°C, adjusting the ethylene pressure inside the kettle to 35 bar, adding 5mg of ethylene bridged diindenyl zirconium dichloride, and allowing a continuous reaction for 0.5 hours to obtain an ethylene/butene copolymer, with a butene insertion amount of 16.0 mol%, as measured by high-temperature nuclear magnetic resonance C spectrum (the same below); the weight average molecular weight of the copolymer is 97500g/mol, as determined by high temperature gel permeation chromatography (the same below).

### Example 2

### (1) Pre-preparation of COF supported NiCl₂ (Buⁿ₃P)₂ catalyst

The COF supported NiCl₂ (Buⁿ₃P)₂ catalyst was prepared using the method for preparing a COF supported catalyst disclosed in WO2022/133849, the specific steps are as follows: activating COF300 at 300°C and under vacuum for 6 hours; under a nitrogen atmosphere, 200mg of activated COF300 and 100mg of NiCl₂ (Buⁿ₃P)₂ catalyst were dispersed in 200ml of toluene, stirred at 50°C for 24 hours for reaction, filtered, washed with toluene, and dried at 70°C to obtain a COF300 supported NiCl₂ (Buⁿ₃P)₂ catalyst.

### (2) Use of the catalyst in the preparation of an ethylene butadiene copolymers by cascade polymerization

Vacuum treating a 0.5 liter high-pressure kettle at 160°C for 3 hours, adding 250ml of toluene to the kettle, adjusting the ethylene pressure inside the kettle to 30 bar, adjusting the temperature inside the kettle to 35°C, and then adding 5mg of the prepared COF300 supported NiCl₂ (Buⁿ₃P)₂ catalyst and 10mmol of methylaluminoxane, allowing reaction for 0.5 hours to obtain the oligomeric product 1-butene, with a 1-butene selectivity of 89.5%; and
adjusting the temperature inside the kettle to 120°C, maintaining the ethylene pressure inside the kettle constant, adding 2.5mg of methylsiliyl bridged diindenyl zirconium dichloride, and allowing a continuous reaction for 1 hour to obtain an ethylene/butene copolymer, with a butene insertion amount of 18.0mol% and a weight average molecular weight of 89500g/mol.

### Example 3

Vacuum treating a 1.0-liter high-pressure kettle at 150°C for 3 hours, adding 600ml of cyclohexane to the kettle, adjusting the ethylene pressure inside the kettle to 30 bar, adjusting the temperature inside the kettle to 95°C, and then adding 50mg of the pretreated COF303, 50mg of Cr (EH)₃ catalyst, and 50mg of 2,5-DMP, mixing for 0.1 hour to obtain an in-situ prepared COF303 supported Cr (EH)₃/2.5-DMP catalyst;
Then, adding 15 mmol of methylaluminoxane and allowing reaction for 0.2 hours to obtain the oligomeric product 1-hexene, with a 1-hexene selectivity of 95.5%; and
Subsequently, adjusting the temperature inside the kettle to 130 °C, adjusting the ethylene pressure inside the kettle to 15 bar, and further adding 10.0mg of CGC-Ti catalyst, allowing reaction for 0.5 hours to obtain an ethylene/hexene copolymer, with a hexene insertion amount of 15.5mol% and a weight average molecular weight of 91400 g/mol.

### Example 4

### (1) Pre-preparation of COF supported Cr (acac)₃/[(o-F-CH) (o-MeOCH) P]₂N (Pr^{j}) catalyst

The COF supported Cr (acac)₃/[(*o*-F-CH) (o-MeOCH) P]₂N (Pr^{j}) catalyst was prepared using the method for preparing a COF supported catalyst disclosed in Chinese application No. 202310731888.5, the specific steps are as follows: activating COF5 at 300°C and under vacuum for 6 hours; in a glove box filled with nitrogen, 50mg of activated COF5 and 50mg of [(o-F-CH) (o-MeOCH) P]₂2N (Pr^{j}) ligand were dispersed in 50ml toluene, stirred at 50°C for 24 hours for reaction, filtered, washed with toluene, and dried at 50°C under vacuum to obtain COF5 supported [(o-F-CH) (o-MeOCH) P]₂N(Prⁱ) ligand; in a glove box filled with nitrogen, 50mg of COF5 supported [(o-F-CH) (o-MeOCH) P]₂N (Pr^{j}) ligand and 15mg of Cr (acac)₃3 catalyst were dispersed in 50ml of toluene, stirred at 50°C for 24 hours for reaction, filtered, washed with toluene, and dried at 50°C under vacuum to obtain COF5 supported Cr (acac) ₃/[(*o*-F-CH) (o-MeOCH) P]₂N (Pr^{j}) catalyst.

### (2) Use of the catalyst in the preparation of an ethylene hexadiene copolymer by cascade polymerization

Vacuum treating a 1.0-liter high-pressure kettle at 150°C for 3 hours, adding 600ml of toluene to the kettle, adjusting the ethylene pressure inside the kettle to 40 bar, adjusting the temperature inside the kettle to 75°C, and then adding 25mg of COF5 supported Cr (acac)₃/[(*o*-F-CH)(*o*-MeOCH)P]₂N(Prⁱ) catalyst; subsequently, adding 15 mmol of methylaluminoxane and allowing reaction for 0.5 hours to obtain an oligomeric product 1-hexene, with a 1-hexene selectivity of 93.1%; and
Adjusting the temperature inside the kettle to 150°C, adjusting the ethylene pressure inside the kettle to 15 bar, adding 4.0mg of ethylene bridged diindenyl zirconium dichloride, and allowing a continuous reaction for 1 hour to obtain an ethylene/hexene copolymer, with a hexene insertion amount of 14.3mol% and a weight average molecular weight of 96500g/mol.

### Example 5

Vacuum treating a 2.0-liter high-pressure kettle at 150°C for 3 hours, adding 1.5 L of cyclohexane to the kettle, adjusting the ethylene pressure inside the kettle to 50 bar, adjusting the temperature inside the kettle to 80°C, and then adding 20mg of pretreated COF1 and 20mg of SNS-Cr catalyst, mixing for 0.1 hour to obtain an in-situ prepared COF1 supported SNS-Cr catalyst;
Then, adding 30 mmol of methylaluminoxane and allowing reaction for 0.2 hours to obtain an oligomeric product 1-hexene, with a 1-hexene selectivity of 96.0%; and
Subsequently, adjusting the temperature inside the kettle to 140°C, adjusting the ethylene pressure inside the kettle to 15 bar, and adding 5.0mg of CGC-Ti catalyst, allowing reaction for 0.5h to obtain an ethylene/hexene copolymer, with a hexene insertion amount of 15.2mol% and a weight average molecular weight of 102000g/mol.

### Example 6

### (1) Pre-preparation of a COF supported PNP/CrCl₃ (THF)₃ catalyst

The COF supported PNP/CrCl₃ (THF)₃ catalyst was prepared using a method for preparing a COF supported catalyst disclosed in WO2022/133849, the specific steps are as follows: activating COF300 at 500°C and under vacuum for 6 hours; under a nitrogen atmosphere, 200mg of activated COF300 and 200mg of PNP/CrCl₃ (THF)₃ catalyst were dispersed in 200ml of toluene, stirred at 50°C for 24 hours for reaction, filtered, washed with toluene, and dried at 70°C to obtain a COF300 supported PNP/CrCl₃ (THF)₃ catalyst.

### (2) Use of the catalyst in the preparation of an ethylene propylene copolymer by cascade polymerization

Vacuum treating a 0.5-liter high-pressure kettle at 160°C for 3 hours, adding 250ml of toluene to the kettle, adjusting the ethylene pressure inside the kettle to 30 bar, adjusting the temperature inside the kettle to 35°C, and then adding 5mg of COF300 supported PNP/CrCl₃ (THF)₃ catalyst and 8mmol of methylaluminoxane, allowing reaction for 0.2 hours to obtain an oligomeric product 1-octene, with a 1-octene selectivity of 68.5%; and Adjusting the temperature inside the kettle to 120°C, adjusting the ethylene pressure inside the kettle to 10 bar, adding 2.5mg of CGC-Ti catalyst, allowing a continuous reaction for 0.5h to obtain an ethylene/octene copolymer, with an octene insertion amount of 12.0mol% and a weight average molecular weight of 117100g/mol.

### Example 7

### (1) Pre-preparation of a COF supported zirconium phenoxide imine catalyst

The COF supported zirconium phenoxide imine catalyst was prepared using a method for preparing a COF supported catalyst disclosed in WO2022/133849, the specific steps are as follows: activating COF303 at 300°C and under vacuum for 8 hours; under a nitrogen atmosphere, 100mg of activated COF303 and 100mg of trimethylaluminum were dispersed in 100ml of n-hexane, stirred at 25°C for 48 hours for reaction, filtered, washed with toluene, and dried at 50°C to obtain a pretreated COF303; in a glove box filled with nitrogen, 100mg of pretreated COF303, 50mg of pretreated zirconium phenoxide imine catalyst, and 100ml of toluene were mixed, stirred at 20°C for 72 hours for reaction, filtered, washed with toluene, and dried at 30°C and under vacuum to obtain the COF303 supported zirconium phenoxide imine catalyst.

### (2) Use of the catalyst in the preparation of a long branched copolymer by cascade polymerization

Vacuum treating a 1-liter high-pressure kettle at 140°C for 3 hours, adding 600ml of toluene to the kettle, adjusting the ethylene pressure inside the kettle to 11 bar, adjusting the temperature inside the kettle to 90°C, and then adding 3.0mg of the prepared COF303 supported zirconium phenoxide imine catalyst and 10mmol of methylaluminoxane, allowing reaction for 0.2 hours to obtain a homopolymeric product polyethylene macromonomer with a terminal double bond ratio of 91.0%; and

Adjusting the temperature inside the kettle to 120°C, maintaining the ethylene pressure inside the kettle constant, add 5mg of CGC-Ti catalyst and 40g of 1-octene, allowing a continuous reaction for 0.5h to obtain a long branched copolymer, with an octene insertion amount of 15.6 mol% and a weight average molecular weight of 105000g/mol.

### Example 8

### (1) Pre-preparation of a COF supported zirconocene dichloride catalyst

The COF supported zirconocene dichloride catalyst was prepared using a method for preparing a COF supported catalyst disclosed in WO2022/133849, the specific steps are as follows: activating COF5 at 400°C and under vacuum for 8 hours; under a nitrogen atmosphere, 100mg of activated COF5 and 100mg of zirconocene dichloride catalyst were dispersed in 100ml of toluene, stirred at 50°C for 24 hours for reaction, filtered, washed with toluene, and dried at 70°C to obtain the COF5 supported zirconocene dichloride catalyst.

### (2) Use of the catalyst in the preparation of a long branched copolymer by cascade polymerization

Vacuum treating a 0.5-liter high-pressure kettle at 150°C for 3 hours, adding 250ml of toluene to the kettle, adjusting the ethylene pressure inside the kettle to 11 bar, adjusting the temperature inside the kettle to 90°C, and then adding 45mg of the prepared COF5 supported zirconocene dichloride catalyst and 6mmol of methylaluminoxane, allowing reaction for 0.2 hours to obtain a homopolymeric product polyethylene macromonomer with a terminal double bond ratio of 75.0%; and
Adjusting the temperature inside the kettle to 120°C, maintaining the ethylene pressure inside the kettle constant, adding 3mg of CGC-Ti catalyst and 40g of 1-octene, and allowing a continuous reaction for 0.5h to obtain a long branched copolymer, with an octene insertion amount of 14.5mol% and a weight average molecular weight of 95000g/mol.

### Example 9

Vacuum treating a 1-liter high-pressure kettle at 160°C for 3 hours, adding 600ml of toluene to the kettle, adjusting the propylene pressure inside the kettle to 2 bar, adjusting the temperature inside the kettle to 105°C, then adding 10.0mg of activated COF1 and 2.5mg of rac-dimethylsilyl-bridged bis (2-methyl-4-phenylindenyl) zirconium dichloride catalyst, mixing for 0.1 hour to obtain an in-situ prepared COF1 supported rac-dimethylsilyl-bridged bis (2-methyl-4-phenylindenyl) zirconium dichloride catalyst;

Then, adding 15 mmol of methylaluminoxane and allowing reaction for 0.2 hours to obtain a homopolymeric product isotactic polypropylene macromonomer, with a terminal double bond ratio of 75.0% and an isotropy of 92%; and

Subsequently, adjusting the temperature inside the kettle to 120 °C, and maintaining the propylene pressure inside the kettle constant, adding 5mg of CGC-Ti catalyst and 40g of 1-octene, allowing a continuous reaction for 0.5 hours to obtain a long branched copolymer, with an octene insertion amount of 16.5mol% and a weight average molecular weight of 65000 g/mol.

### Example 10

### (1) Pre-preparation of a COF supported decamethyl-dicyclopentadiene zirconium dichloride

### catalyst

The COF supported decamethyl-dicyclopentadiene zirconium dichloride catalyst was prepared using a method for preparing a COF supported catalyst disclosed in WO2022/133849, the specific steps are as follows: activating COF300 at 400°C and under vacuum for 6 hours; under a nitrogen atmosphere, 100mg of activated COF300 and 100mg of triethylaluminum were dispersed in 100ml of n-hexane, stirred at 40°C for 24 hours for reaction, filtered, washed with toluene, and dried at 50°C to obtain a pretreated COF300; in a glove box filled with nitrogen, 50mg of pretreated COF300, 20mg of decamethyl-dicyclopentadiene zirconium dichloride catalyst, and 50ml of toluene were mixed, stirred at 20°C for 48 hours for reaction, filtered, washed with toluene, and dried at 30°C and under vacuum to obtain the COF300 supported decamethyl-dicyclopentadiene zirconium dichloride catalyst.

### (2) Use of the catalyst in the preparation of PMP by cascade polymerization

Vacuum treating 1-liter high-pressure kettle 1 and 1-liter high-pressure kettle 2 at 150°C for 2 hours, adding 600ml of toluene to kettle 1 and kettle 2 respectively, adjusting propylene pressure inside kettle 1 to 22 bar, adjusting the temperature inside kettle 1 to 30 °C , and then adding 10.0mg of the prepared COF300 supported decamethyl-dicyclopentadiene zirconium dichloride catalyst and 10mmol of methylaluminoxane, allowing reaction for 1 hour to obtain 4-methyl-1-pentene with a selectivity of 58.0%;

Separating and purifying the 4-methyl-1-pentene by extraction to achieve a purity of 95.4%; adding the separated and purified 4-methyl-1-pentene into kettle 2, adjusting the temperature inside kettle 2 to 50°C, adding 5mg of pyridine amine hafnium catalyst and 100mg of methylaluminoxane, allowing reaction for 0.5 hours to obtain poly (4-methyl-1-pentene) (PMP), with a weight average molecular weight of 195000 g/mol.

### Example 11

### (1) Pre-preparation of a COF supported decamethyl-dicyclopentadiene zirconium dichloride

### catalyst

The COF supported decamethyl-dicyclopentadiene zirconium dichloride catalyst was prepared using a method for preparing a COF supported catalyst disclosed in WO2022/133849, the specific steps are as follows: activating COF303 at 400°C and under vacuum for 6 hours; under a nitrogen atmosphere, 100mg of activated COF303 and 100mg of decamethyl-dicyclopentadiene zirconium dichloride catalyst were dispersed in 100ml of toluene, stirred at 50°C for 24 hours for reaction, filtered, washed with toluene, and dried at 50°C to obtain the COF303 supported decamethyl-dicyclopentadiene zirconium dichloride catalyst.

### (2) Use of the catalyst in the preparation of 4-methyl-1-pentene/α-polyolefin by cascade polymerization

Vacuum treating 1-liter high-pressure kettle 1 and 1-liter high-pressure kettle 2 at 160°C for 3 hours, adding 600ml of toluene to kettle 1 and kettle 2 respectively, adjusting propylene pressure inside kettle 1 to 22 bar, adjusting the temperature inside kettle 1 to 30 °C , and then adding 10.0mg of the prepared COF303 supported decamethyl-dicyclopentadiene zirconium dichloride catalyst and 12mmol of methylaluminoxane, allowing reaction for 1 hour to obtain 4-methyl-1-pentene with a selectivity of 56.0%;

Separating and purifying 4-methyl-1-pentene by extraction to achieve a purity of 94.7%; adding the separated and purified 4-methyl-1-pentene into kettle 2, adjusting the temperature inside kettle 2 to 50°C, adding 5mg of pyridine amine hafnium catalyst, 20g of 1-hexene, and 100mg of methylaluminoxane, allowing reaction for 0.5h to obtain 4-methyl-1-pentene/1-hexene copolymer with a weight average molecular weight of 135000 g/mol.

### Comparative Example 1

Use of SNS-Cr catalyst in the preparation of an ethylene copolymers by cascade polymerization

Vacuum treating a 2.0-liter high-pressure kettle at 150°C for 3 hours, adding 1.5 L of cyclohexane to the kettle, adjusting the ethylene pressure inside the kettle to 50 bar, adjusting the temperature inside the kettle to 80°C, then adding 20mg of SNS-Cr catalyst and 30mmol of methylaluminoxane, allowing reaction for 0.2 hours to obtain the oligomeric product 1-hexene, with 1-hexene selectivity of more than 99.0%; and

Adjusting the temperature inside the kettle to 140°C, adjusting the ethylene pressure inside the kettle to 15 bar, adding 5.0mg of CGC-Ti catalyst, allowing a continuous reaction for 0.5h to obtain an ethylene/hexene copolymer, with a hexene insertion amount of 15.2mol% and a weight average molecular weight of 48300g/mol.

By comparing the ethylene/hexene copolymers prepared in Example 5 and Comparative Example 1, it can be seen that the molecular weight of the copolymer obtained by using COF supported SNS-Cr catalyst in Example 5 is significantly increased, which indicates that introducing a COF supported catalyst into the cascade polymerization technology reduces the influence of SNS-Cr catalyst on the copolymerization catalyst.

### Comparative Example 2

Use of zirconium phenoxide imine catalyst in the preparation of a long branched copolymer by cascade polymerization

Vacuum treating a 1-liter high-pressure kettle at 140°C for 3 hours, adding 600ml of toluene to the kettle, adjusting the ethylene pressure inside the kettle to 11 bar, adjusting the temperature inside the kettle to 90°C, then adding 1.3mg of zirconium phenoxide imine catalyst and 10mmol of methylaluminoxane, allowing reaction for 0.2 hours to obtain a homopolymeric product polyethylene macromonomer with a terminal double bond ratio of 93.0%; and

Adjusting the temperature inside the kettle to 120°C, maintaining the ethylene pressure inside the kettle constant, adding 5mg of CGC-Ti catalyst and 40g of 1-octene, allowing a continuous reaction for 0.5h to obtain a long branched copolymer, with an octene insertion amount of 18.4mol% and a weight average molecular weight of 125000g/mol.

By comparing the copolymers prepared in Example 7 and Comparative Example 2, it can be seen that the molecular weight of the copolymer obtained using a COF supported zirconium phenoxide imine catalyst in Example 7 is significantly increased, and the ability to copolymerize alpha-olefins is also significantly improved, which indicates that introducing a COF supported catalyst into cascade polymerization technology reduces the influence of zirconium phenoxide imine catalyst on the copolymerization catalyst.

### Comparative Example 3

Use of rac-dimethylsilyl-bridged bis (2-methyl-4-phenylindenyl) zirconium dichloride catalyst in the preparation of a long branched copolymer by cascade polymerization

Vacuum treating a 1-liter high-pressure kettle at 160°C for 3 hours, adding 600ml of toluene to the kettle, adjusting the propylene pressure inside the kettle to 2 bar, adjusting the temperature inside the kettle to 105°C, then adding 2.0mg of iPM-Zr and 15mmol of methylaluminoxane, allowing reaction for 0.2 hours to obtain a homopolymeric product isotactic polypropylene macromonomer with a terminal double bond ratio of 78.0% and an isotropy of 86%; and

Adjusting the temperature inside the kettle to 120°C, maintaining the propylene pressure inside the kettle constant, adding 5mg of CGC-Ti catalyst and 40g of 1-octene, allowing a continuous reaction for 0.5h to obtain a long branched copolymer, with an octene insertion amount of 18.1 mol% and a weight average molecular weight of 78000g/mol.

By comparing the copolymers prepared in Example 9 and Comparative Example 3, it can be seen that the use of a COF supported rac-dimethylsilyl-bridged bis(2-methyl-4-phenylindenyl) zirconium dichloride catalyst in Example 9 not only improves the isotropy of the macromonomer produced due to the use of the catalyst, but also reduces the influence of the catalyst on the copolymerization catalyst, and the ability to copolymerize alpha-olefins and the molecular weight of the copolymer are significantly improved.

### Comparative Example 4

Use of decamethyl-dicyclopentadiene zirconium dichloride catalyst in the preparation of 4-methyl-1-pentene/α-polyolefin by cascade polymerization

Vacuum treating 1-liter high-pressure kettle 1 and 1-liter high-pressure kettle 2 at 160°C for 3 hours, adding 600ml of toluene to kettle 1 and kettle 2 respectively, adjusting the propylene pressure inside kettle 1 to 22 bar, adjusting the temperature inside kettle 1 to 30°C, then adding 2.0mg of decamethyl-dicyclopentadiene zirconium dichloride catalyst and 12mmol of methylaluminoxane, allowing reaction for 1 hour to obtain 4-methyl-1-pentene with a selectivity of 56.5%;

Separating and purifying 4-methyl-1-pentene by extraction to achieve a purity of 95.2%; adding the separated and purified 4-methyl-1-pentene into kettle 2, adjusting the temperature inside kettle 2 to 50°C, adding 5mg of pyridine amine hafnium catalyst, 20g of 1-hexene, and 100mg of methylaluminoxane, allowing reaction for 0.5h to obtain 4-methyl-1-pentene/1-hexene copolymer with a weight average molecular weight of 155000g/mol. By comparing the copolymers prepared in Example 11 and Comparative Example 4, it can be seen that the molecular weight of the copolymer obtained by using a COF supported decamethyl-dicyclopentadiene zirconium dichloride catalyst in Example 11 is significantly increased, which indicates that introducing a COF supported catalyst into cascade polymerization technology reduces the influence of decamethyl-dicyclopentadiene zirconium dichloride catalyst on the copolymer catalyst.

The above examples are only used to illustrate the technical solution of the present invention and not to limit it; although the present invention has been described in detail with reference to the preferred examples, those skilled in the art should understand that specific embodiments of the present invention can still be modified or some technical features can be equivalently replaced; without departing from the spirit of the technical solution of the present invention, all of them should be included in the scope of the technical solution claimed in the present invention.

## Claims

1. A method for preparing polyolefins by cascade polymerization, comprising the following steps:
(1) under anhydrous and anaerobic conditions, ethylene and/or propylene monomers are subjected to oligomerization reaction in a non-polar organic solvent in the presence of a COF supported oligomerization catalyst or a COF supported homopolymerization catalyst, and optional cocatalyst, to obtain an oligomeric product or macromonomer with terminal double bonds, respectively; and
(2) then, under anhydrous and anaerobic conditions, in the presence of an olefin polymerization catalyst, the oligomeric product or macromonomer with terminal double bonds is further polymerized with an olefin monomer in a non-polar organic solvent to obtain the polyolefins.

2. The method according to claim 1, wherein the COF supported oligomerization catalyst is selected from the group consisting of 1,2,3,4,5-Ph₅-Cp/Cr (EH)₃, {2- [1-(3H-Ind) CyH]Th} TiCl₃, decamethyl-dicyclopentadiene zirconium dichloride, Ar₂PN(Me)PAr₂/Cr , {HN(CH₂CH₂PPh₂)₂}CrCl₃ , Cr(EH)₃/2,5-DMP , [(2-Pe-S-Et)₂-A]CrCl₃ , DPPB/[Cr(H₂O)₄Cl₂]Cl2H₂O , SNS-Cr , NiCl₂{[2-(5-Ph-Pyz)Et]₂ E} , NiCl₂{[2-(3,5-Me₂Pyz)Me]₂BuA} , Mo(µ-N-Bu^{t}AlCl₂)₂ , NiBr₂{[2-(3,5-Me₂Pyz)]EtA} , V(NAd)Cl₂[8-(2,6-Me₂An)-5,6,7-H₃Qu] , NiBr₂[(3,5-Me₂Pyz)₂PhP] , WCl₆/2DippNH₂/4NEt₃ , TaCl₃(NDipp)(tmeda) , Nb(N-2,6-Pr^{j}₂Ph)Me₂[2-(2,6-Me₂Ph)NCH₂(Pyd)] , Ti(OBuⁿ)₄ , NiCl₂(Buⁿ₃P)₂ , Cr(acac)₃/Ph₂P)₂NPrⁱ , Cr(acac)₃/[(*o*-F-CH)(*o*-MeOCH)P]₂N(Prⁱ) , Cr(CO)₄[(Ph₂P)₂NPr^{j}] , [(DPPDME)CrCl₃]₂ , CrCl₂(THF)₂/Ph₂PN(Me)(CH₂)3N(Me)PPh₂ , Cr(SBDP)Cl₃ , [2-CrCl₂]⁺[B(C₆F₅)₄]⁻ , Cr(acac)₃/Ph₂PN(Bu^{t})PPh₂ , PNP/CrCl₃(THF)₃ and Cr (CO) ₆/Ph₂PN (Pr^{j}) Si (CH₃) ₂CH₂Ph₂.

3. The method according to claim 2, wherein the COF supported oligomerization catalyst is selected from the group consisting of Ti (OBuⁿ) ₄, NiCl₂ (Buⁿ₃P) ₂, Cr (EH) ₃/2,5-DMP, Cr (acac) ₃/[(*o*-F-CH) (*o*-MeOCH)P]₂N (Prⁱ), SNS-Cr, PNP/CrCl₃ (THF)₃, [(2-Pe-S-Et) ₂-A] CrCl₃, DPPB/[Cr (H₂O) ₄Cl₂] Cl·2H₂O, NiCl₂ {[2-(5-Ph-Pyz) Et] ₂E}, NiCl₂ {[2-(3,5-Me₂Pyz) Me] ₂BuA}, NiBr₂ {[2-(3,5-Me₂Pyz)]EtA}, NiBr₂[(3,5-Me₂Pyz)₂PhP], and decamethyl-dicyclopentadiene zirconium dichloride.

4. The method according to claim 1, wherein the COF supported homopolymerization catalyst is selected from the group consisting of rac-dimethylsilyl-bridged bis(2-methyl-4-phenylindenyl) zirconium dichloride, zirconocene dichloride, [CpMe₄(SiMe₂N-Bu^{t})]TiMe₂ , dicyclopentadienyl dimethyl hafnium, diindenyl dimethyl zirconium, rac-vinylidene-bridged diindenyl zirconium dichloride, rac-dimethylsilyl-bridged di(2-methylindenyl) zirconium dichloride, dimethylsilyl-bridged diindenyl zirconium dichloride, diphenylcarbon-bridged cyclopentadienyl fluorenyl zirconium dichloride, dimethylsilyl-bridged tetramethyl cyclopentadienyl tert-butylamino dimethyl titanium, diindenyl zirconium dichloride, dicyclopentadienyl zirconium bis(phenoxide), dimethylsilyl-bridged diindenyl zirconium dichloride, diphenylcarbon-bridged cyclopentadienyl fluorenyl zirconium dichloride, diphenylcarbon-bridged cyclopentadienyl-2-dimethylamino-fluorenyl )zirconium dichloride, dimethylsilyl-bridged tetramethyl cyclopentadienyl tert-butylamino dimethyl titanium, dimethylsilyl-bridged 3-pyrrolyindenyl tert-butylamino dimethyl titanium, rac-dimethylsilyl-bridged di(2-methylindenyl) zirconium dichloride, dimethylsilyl-bridged fluorenyl tert-butylamino dimethyl titanium, zirconium phenoxide imine, titanium phenoxide imine, {2-SiMe₃-6-{[(3,5-F₂Ph)Im]Me}PhO}₂TiCl₂ , [(N-Bu^{t}Sa)CyP-A]₂ZrCl₂ , {κ²-1-P(2-OMe-Ph)₂-2-P(O)(OEt)₂-Ph}PdMe(2,6-Me₂Pyd)⁺(SbF₆)- and (β- Ki)₂ZrCl₂.

5. The method according to claim 4, wherein the COF supported homopolymerization catalyst is selected from the group consisting of rac-dimethylsilyl-bridged bis(2-methyl-4-phenylindenyl) zirconium dichloride, [CpMe₄(SiMe₂N-Bu^{t})]TiMe₂ , zirconocene dichloride, dimethylsilyl-bridged diindenyl zirconium dichloride, dicyclopentadienyl zirconium bis(phenoxide), dimethylsilyl-bridged diindenyl zirconium dichloride, titanium phenoxide imine, and zirconium phenoxide imine.

6. The method according to claim 1, wherein the amount of the COF supported oligomerization catalyst or COF supported homopolymerization catalyst is 0.5-100 mg/L, preferably 1-50 mg/L, and more preferably 3-20 mg/L, calculated relative to the volume (L) of the non-polar organic solvent used.

7. The method according to claim 1, wherein in step (1), the reaction temperature is 20-180°C, preferably 50-120°C; the pressure is 0.2-4.0MPa; and the reaction time is 5-100mins, preferably 10-30mins.

8. The method according to claim 1, wherein the oligomeric product comprises alpha-olefins such as 1-butene, 1-hexene, and 1-octene, and 4-methyl-1-pentene.

9. The method according to claim 1, wherein the macromonomer with terminal double bonds is a polyethylene/polypropylene macromonomer with a molecular weight of 1000-10000 g/mol, preferably 2000-5000 g/mol.

10. The method according to any one of claims 1-9, wherein the olefin polymerization catalyst is selected from the group consisting of zirconocene dichloride, dicyclopentadienyl dimethyl hafnium, diindenyl dimethyl zirconium, rac-vinylidene-bridged diindenyl zirconium dichloride, rac-dimethylsilyl-bridged di(2-methylindenyl) zirconium dichloride, diphenylcarbon-bridged cyclopentadienyl fluorenyl zirconium dichloride, dimethylsilyl-bridged tetramethylcyclopentadienyl tert-butylamino dimethyl titanium, diindenyl zirconium dichloride, methylsilyl (N-tert-butylamino) (tetramethylcyclopentadienyl) titanium dichloride, bis(2-methyl-4,5-phenylindenyl) zirconium dichloride, dicyclopentadienyl zirconium bis(phenoxide), dimethylsilyl-bridged diindenyl zirconium dichloride, diphenylcarbon-bridged cyclopentadienyl-fluorenyl zirconium dichloride, CGC-Ti catalyst, and pyridine amine hafnium catalyst.

11. The method according to any one of claims 1-9, wherein the ratio of the oligomeric product to the olefin monomer is (0.2-2): 1, preferably (0.3-1): 1.

12. The method according to any one of claims 1-9, wherein the ratio of the macromonomer with terminal double bonds to the olefin monomer is (0.001-0.1): 1, preferably (0.01-0.04): 1.

13. The method according to any one of claims 1-9, wherein in step (2), the reaction temperature is 20-180°C, preferably 80-160°C; the pressure is 0.5-4.0MPa, preferably 1.0-3.0 MPa; and the reaction time is 10-200mins, preferably 30-60mins.

14. Polyolefins obtained by the method according to any one of claims 1-13.
